(19) Europäisches Patentamt / European Patent Office / Office européen des brevets

(11) **EP 4 474 860 A1**

(12) **EUROPEAN PATENT APPLICATION**
published in accordance with Art. 153(4) EPC

(43) Date of publication:
**11.12.2024 Bulletin 2024/50**

(21) Application number: **22924965.1**

(22) Date of filing: **24.11.2022**

(51) International Patent Classification (IPC):
**G01S 7/4865** (2020.01) **G01S 17/10** (2020.01)

(52) Cooperative Patent Classification (CPC):
**G01S 7/4865; G01S 17/10**

(86) International application number:
**PCT/JP2022/043371**

(87) International publication number:
**WO 2023/149060 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.02.2022 JP 2022014089**

(71) Applicant: **KOITO MANUFACTURING CO., LTD.
Minato-ku, Tokyo, 108-8711 (JP)**

(72) Inventors:
• **HOSHI Kenichi**
  **Shizuoka-shi, Shizuoka 424-8764 (JP)**
• **ITABA Koji**
  **Shizuoka-shi, Shizuoka 424-8764 (JP)**

(74) Representative: **Grünecker Patent- und
Rechtsanwälte
PartG mbB
Leopoldstraße 4
80802 München (DE)**

(54) **MEASUREMENT DEVICE**

(57) A measurement device (1) including: a light emitting unit (10) configured to emit pulsed light; an imaging sensor (22) configured to output a signal value corresponding to an exposure amount for each pixel; a timing control unit (32) configured to set an exposure period corresponding to a measurement target region and cause the pixel of the imaging sensor (22) to be exposed to reflected light in the exposure period; and a signal acquisition unit configured to acquire a signal value corresponding to the exposure amount of the pixel in the exposure period based on an output of the imaging sensor (22), in which the timing control unit (32) sets, as the exposure period, a plurality of sub-exposure periods that are longer than a width of the pulsed light and have different start timings so as to have an overlap period corresponding to the width of the pulsed light, and causes the pixel of the imaging sensor (22) to be exposed to the reflected light in each of the sub-exposure periods, and the signal acquisition unit acquires the signal value corresponding to a sum of exposure amounts of the pixel in the plurality of sub-exposure periods.

FIG. 9A

$$Tx = Tb - Gw \times \frac{Sa}{Sa + Sb}$$

$$Lx = \frac{Co \times Tx}{2}$$

**EP 4 474 860 A1**

# Description

## TECHNICAL FIELD

The present disclosure relates to a measurement device.

## BACKGROUND ART

Patent Literature 1 discloses an indirect time-of-flight (ToF) measurement device that measures a distance to a target based on emission of laser light (pulsed light) and exposure to the reflected and returned light.

## CITATION LIST

## PATENT LITERATURE

Patent Literature 1: JP2021-25833A

## SUMMARY OF INVENTION

## TECHNICAL PROBLEM

In the measurement device disclosed in Patent Literature 1, exposure is performed with the same width as a pulse width of emitted light. By setting both a light emission pulse width and an exposure width to be long, a depth of a measurement target region can be increased, and as a result, a frame rate (FPS) can be increased. However, due to the restriction of a light source device, the light emission pulse width is often limited to a certain range, and when an exposure period is extended beyond the range, the light emission pulse width < the exposure width. In this case, the depth of the measurement target region can also be increased, and the frame rate can also be increased, but the exposure occurs for a certain period (that is, a dead zone occurs), and a section occurs in which a time or a distance cannot be measured by using the indirect ToF. Therefore, it is difficult to increase the frame rate under the condition that the light emission pulse width < the exposure width.

An object of the present disclosure is to increase a frame rate even under a condition that a light emission pulse width < an exposure width.

## SOLUTION TO PROBLEM

A measurement device according to one aspect of the present disclosure for achieving the above-described object includes:

a light emitting unit configured to emit pulsed light;
an imaging sensor configured to output a signal value corresponding to an exposure amount for each pixel;
a timing control unit configured to set an exposure period corresponding to a measurement target region and cause the pixel of the imaging sensor to be exposed to reflected light in the exposure period; and a signal acquisition unit configured to acquire a signal value corresponding to the exposure amount of the pixel in the exposure period based on an output of the imaging sensor, in which
the timing control unit sets, as the exposure period, a plurality of sub-exposure periods that are longer than a width of the pulsed light and have different start timings so as to have an overlap period corresponding to the width of the pulsed light, and causes the pixel of the imaging sensor to be exposed to the reflected light in each of the sub-exposure periods, and
the signal acquisition unit acquires the signal value corresponding to a sum of exposure amounts of the pixel in the plurality of sub-exposure periods.

## ADVANTAGEOUS EFFECTS OF INVENTION

According to the present disclosure, a frame rate can be increased even under a condition that a light emission pulse width < an exposure width.

## BRIEF DESCRIPTION OF DRAWINGS

[FIG. 1A] FIG. 1A is a diagram showing a configuration of a measurement device 1.
[FIG. 1B] FIG. 1B is a diagram showing light emission timings and exposure timings.
[FIG. 2] FIG. 2 is a diagram showing distance image creation using an indirect ToF.
[FIG. 3A] FIG. 3A is a diagram showing a normal mode.
[FIG. 3B] FIG. 3B is a diagram showing a high-speed mode.
[FIG. 4A] FIG. 4A is a diagram showing a light emission operation and an exposure operation in the normal mode, and is a diagram showing a case in which an arrival time of reflected light is earlier than an exposure start timing (delay time Tdelay).
[FIG. 4B] FIG. 4B is a diagram showing a light emission operation and an exposure operation in the normal mode, and is a diagram showing a case in which the arrival time of the reflected light coincides with the exposure start timing (delay time Tdelay).
[FIG. 4C] FIG. 4C is a diagram showing a light emission operation and an exposure operation in the normal mode, and is a diagram showing a case in which the arrival time of the reflected light is later than the exposure start timing (delay time Tdelay).
[FIG. 5] FIG. 5 is a diagram showing a relation between a distance to a target and an exposure amount in the normal mode.
[FIG. 6A] FIG. 6A is a diagram showing a relation between a light emission operation and exposure operations in the normal mode.

[FIG. 6B] FIG. 6B is a diagram showing a relation between an exposure amount and a distance for each of exposure operations A and B in FIG. 6A.

[FIG. 7A] FIG. 7A is a diagram showing processing in the high-speed mode, and is a diagram showing a case in which an arrival time of reflected light coincides with an exposure start timing (delay time Tdelay).

[FIG. 7B] FIG. 7B is a diagram showing processing in the high-speed mode, and is a diagram showing a case in which the arrival time of the reflected light is later than the exposure start timing (delay time Tdelay).

[FIG. 8] FIG. 8 is a diagram showing a relation between a distance to the target and an exposure amount in the high-speed mode.

[FIG. 9A] FIG. 9A is a timing chart of a light emission operation and exposure operations in the high-speed mode.

[FIG. 9B] FIG. 9B is a diagram showing a relation between a distance to the target and an exposure amount.

[FIG. 10] FIG. 10 is a diagram showing a configuration example of a four-tap imaging sensor 22.

[FIG. 11A] FIG. 11A is a timing chart of a light emission operation and light receiving operations in the normal mode when the four-tap imaging sensor 22 is used.

[FIG. 11B] FIG. 11B is a diagram showing a relation between a distance to the target and an exposure amount.

[FIG. 12A] FIG. 12A is a timing chart of a light emission operation and light receiving operations in the high-speed mode when the four-tap imaging sensor 22 is used.

[FIG. 12B] FIG. 12B is a diagram showing a relation between a distance to the target and an exposure amount.

[FIG. 13] FIG. 13 is a diagram showing that sub-exposure operations (sub-exposure periods) are alternately performed.

[FIG. 14A] FIG. 14A is a timing chart of a light emission operation and exposure operations when there are three sub-exposure operations.

[FIG. 14B] FIG. 14B is a diagram showing a relation between a distance and an exposure amount when there are three sub-exposure operations.

DESCRIPTION OF EMBODIMENTS

Hereinafter, an embodiment of the present disclosure will be described with reference to the drawings.

= = = = = Embodiment = = = = =

<<Overview of Measurement Device»

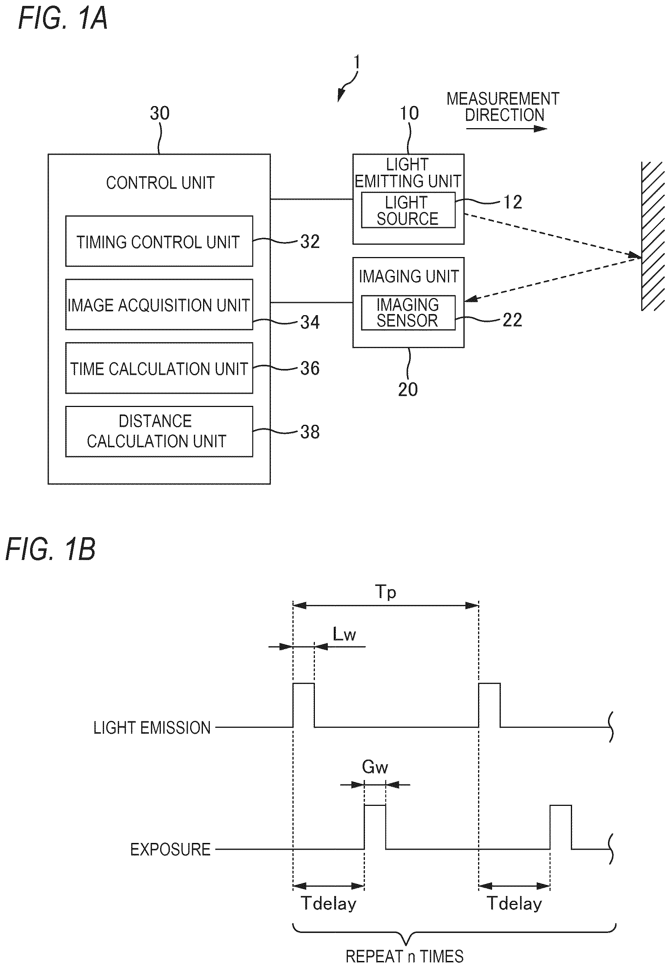

FIG. 1A is a diagram showing a configuration of a measurement device 1.

The measurement device 1 shown in FIG. 1A is a time-of-flight (ToF) device that measures a distance to an object in front. In the present embodiment, an indirect ToF camera is used. Such a measurement device 1 can remove influence of fog or rain, and can also perform imaging or measurement in bad weather. The measurement device 1 is provided, for example, in a vehicle.

As shown in FIG. 1A, the measurement device 1 includes a light emitting unit 10, an imaging unit 20, and a control unit 30.

The light emitting unit 10 emits (projects) light to a space to be imaged. The light emitting unit 10 emits light according to an instruction from the control unit 30. The light emitting unit 10 includes a light source 12 and a projecting optical system (not shown) that emits light emitted by the light source 12.

The light source 12 is a light source including a light emitting element. The light source 12 emits pulsed laser light under the control of the control unit 30. Hereinafter, this pulsed light is also referred to as a light emission pulse.

The imaging unit 20 (indirect ToF camera) performs imaging based on exposure to light reflected by a target of distance measurement. The imaging unit 20 includes an imaging sensor 22 and an exposure optical system (not shown) that guides incident (exposed) light to the imaging sensor 22.

The imaging sensor 22 captures an image of an object to be imaged according to an instruction from the control unit 30 and outputs image data obtained by capturing an image to an image acquisition unit 34 of the control unit 30. A value (pixel data) of each pixel constituting the image data indicates a signal value corresponding to an exposure amount. The imaging sensor 22 will be described later.

The control unit 30 controls the measurement device 1. The control unit 30 is implemented by a hardware configuration including an element such as a memory and a CPU, and a circuit. The control unit 30 implements a predetermined function by the CPU executing a program stored in the memory. The control unit 30 is not limited to being implemented by executing a software processing using the memory and the CPU. For example, the control unit 30 may be implemented by hardware such as an ASIC or an FPGA. FIG. 1A shows various functions implemented by the control unit 30. The control unit 30 includes a timing control unit 32, the image acquisition unit 34, a time calculation unit 36, and a distance calculation unit 38.

The timing control unit 32 controls a light emission timing of the light emitting unit 10 and an exposure timing of the imaging unit 20. The light emission timing and the exposure timing will be described later.

The image acquisition unit 34 acquires image data from the imaging sensor 22 of the imaging unit 20. The image acquisition unit 34 includes a memory (not shown) that stores the acquired image data. The image acquisition unit 34 corresponds to a "signal acquisition unit".

The time calculation unit 36 calculates an arrival time (time of flight of light: ToF) from when the light emitting unit 10 emits light until reflected light reaches the imaging sensor 22. In the present embodiment, the time calculation unit 36 corresponds to a "calculation unit".

The distance calculation unit 38 calculates a distance based on the arrival time of the light. As will be described later, the measurement device 1 can acquire a distance image by the distance calculation unit 38 calculating a distance for each pixel.

<<Indirect ToF>>

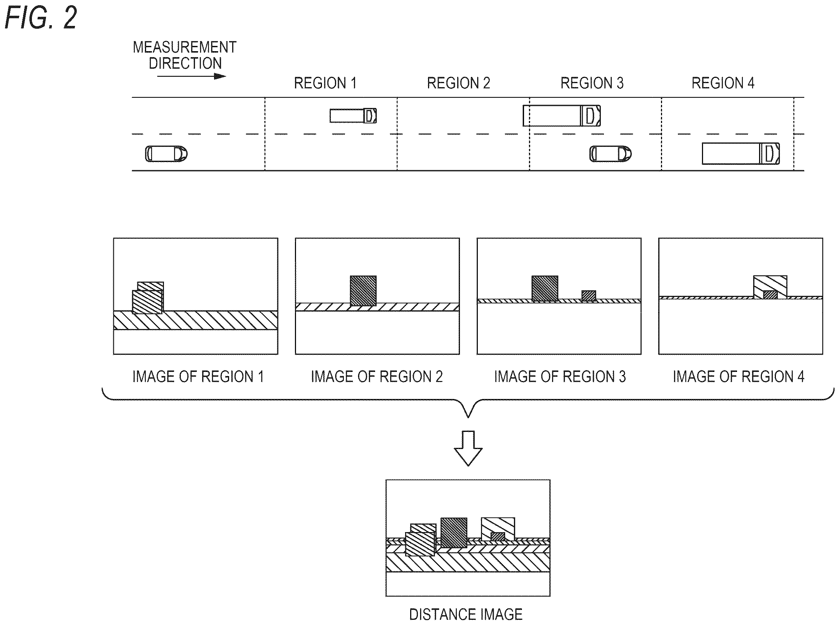

FIG. 1B is a diagram showing light emission timings and exposure timings. FIG. 2 is a diagram showing distance image creation using an indirect ToF.

As shown in FIG. 1B, the control unit 30 (timing control unit 32) causes the light emitting unit 10 to emit a light emission pulse. A width of the light emission pulse (hereinafter, pulse width) is Lw.

The control unit 30 (timing control unit 32) causes the imaging sensor 22 of the imaging unit 20 to be exposed to the reflected light after a time Tdelay from emission of the light emission pulse. An exposure period is set based on the delay time Tdelay and an exposure width Gw.

The delay time Tdelay is a time (delay time) from the emission of the light emission pulse to a start of the exposure period. The delay time Tdelay is set according to a distance to a measurement target region. That is, by setting a short time from when the light emitting unit 10 emits the light emission pulse until the imaging sensor 22 is exposed to light, the measurement device 1 can acquire an image of a target (object that reflects light) in a short distance region. Conversely, by setting a long time from when the light emitting unit 10 emits the light emission pulse until the imaging sensor 22 is exposed to light, the measurement device 1 can acquire an image of the target in a long distance region.

The exposure width Gw is a width of the exposure period (that is, a period from a start of the exposure to an end of the exposure). The width of the exposure period defines a length of the measurement target region in a measurement direction. Accordingly, the smaller the exposure width Gw is, the higher a distance resolution becomes.

In the present embodiment, as shown in FIG. 2, different exposure periods are set according to the distance to the measurement target region. Four regions are shown in FIG. 2 for simplicity, but actually, the number N of regions is not limited to four.

The light emission and the exposure are repeated a plurality of times at a cycle Tp shown in FIG. 1B. This is for storing charges in the imaging sensor 22 to be described later. The farther the measurement target region is, the larger the number n of times of repetition is set. This is because the farther the region is, the weaker the reflected light becomes.

In an image obtained for each region, an image of a target (object that reflects light) present in the region is captured. The image for each region may be referred to as a "range image". A value (image data) of each pixel constituting the image indicates a signal value corresponding to an exposure amount. The number of (for example, four) range images obtained by one imaging may be referred to as a "subframe". A plurality of regions (for example, four regions) measured by one imaging may be referred to as a "zone".

As shown in FIG. 2, the measurement device 1 according to the present embodiment acquires image data on a plurality of regions of different distances, and can acquire a distance image indicating a distance to a target based on the plurality of pieces of acquired image data. While the range image is an image obtained by cutting out a part of the distance, an image obtained by adding up these images is an all-distance composite image (corresponding to a generally captured image). On the other hand, distance information is calculated based on pixel value information of the range image, and an image in which the distance information is arranged for each pixel becomes a distance image. The images are sequentially played into a moving image, and the term "frame" is used to reflect a time axis at that time. Therefore, the "frame" in the ToF camera includes the all-distance composite image and the distance image.

<<Image Acquisition>>

First, the control unit 30 (timing control unit 32) causes the light emitting unit 10 to emit light at the cycle Tp (see FIG. 1B), and controls an exposure timing of the imaging sensor 22 of the imaging unit 20 according to the light emission timing to perform exposure. Here, it is assumed that an image of one region is acquired by one imaging.

First, the control unit 30 acquires an image of a region 1. At this time, the timing control unit 32 causes the imaging sensor 22 of the imaging unit 20 to be exposed to light for each pixel of an image in exposure periods delayed from the light emission timing.

The timing control unit 32 causes the imaging sensor 22 of the imaging unit 20 to be exposed to light repeatedly (n times) for each cycle Tp, and causes storage units CS (to be described later) of the imaging sensor 22 to store charges.

The image acquisition unit 34 acquires a signal value corresponding to the charges stored in the imaging sensor 22 (the storage units CS). The acquired image data on the region 1 is written into an image memory.

Next, in the same manner, the control unit 30 acquires an image of a region 2 adjacent (contiguous) to the region 1 in the measurement direction. Then, the control unit 30 writes image data on the region 2 to the image memory of the image acquisition unit 34. The delay time Tdelay from a light emission timing in the region 2 is set to be longer than that in the case of the region 1. As described above, the number of times of repetition (the number of times of charge storage) is set to increase as the measurement target region becomes further away.

By performing the above operation up to a region N, an image up to the region N (entire-region image) is acquired.

«Normal Mode and High-speed Mode»

The measurement device 1 according to the present embodiment can perform measurement in two modes: a normal mode and a high-speed mode.

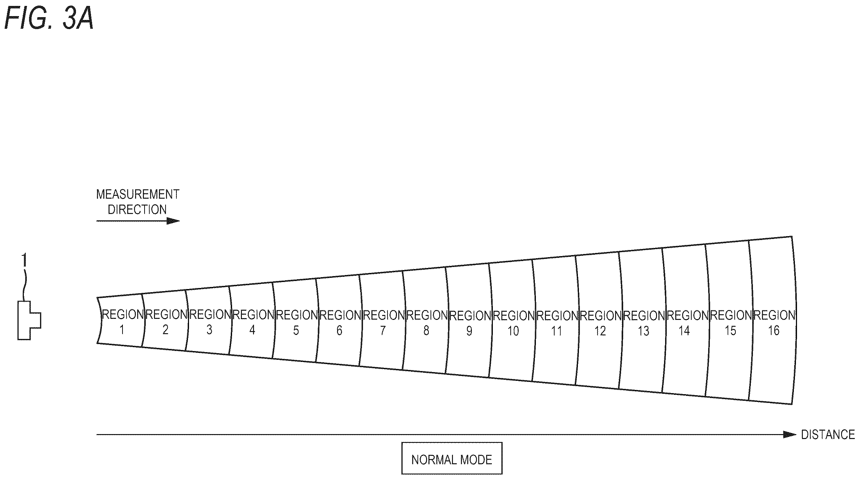

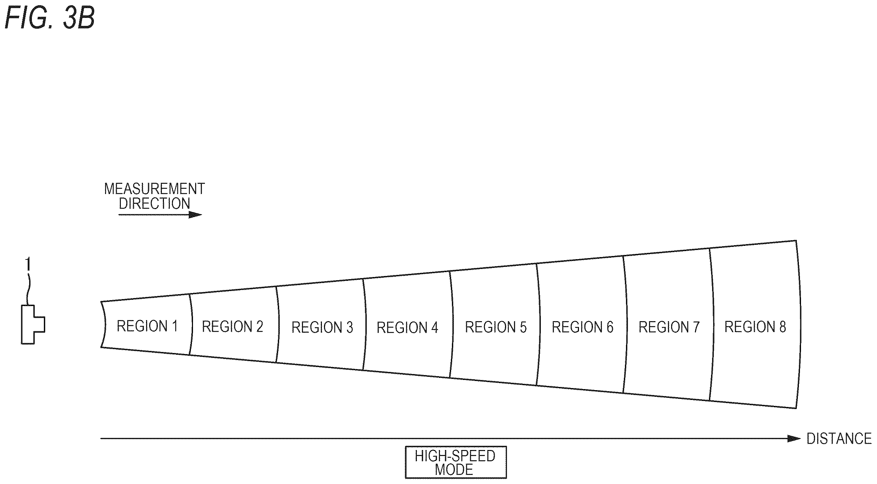

FIGS. 3A and 3B are diagrams showing the normal mode and the high-speed mode. In FIGS. 3A and 3B, a length in the measurement direction indicates a distance from the measurement device 1.

The normal mode is a mode for performing normal measurement (general measurement by using the indirect ToF). In the normal mode, a pulse width Lw of a light emission pulse and a width Gw of an exposure period are set to be equal ($Lw = Gw$). For example, when the pulse width Lw of the light emission pulse is set to 10 nsec and the width Gw of the exposure period is set to 10 nsec, a depth (width in the measurement direction) of the measurement target region is set to 1.5 m.

The high-speed mode is a mode for performing measurement at a higher speed than the normal mode. In the high-speed mode, a width Gw of an exposure period is set to be larger than a pulse width Lw of a light emission pulse ($Gw > Lw$). For example, when the pulse width of the light emission pulse is set to 10 nsec and the width Gw of the exposure period is set to 100 nsec, the depth (width in the measurement direction) of the measurement target region is set to 15 m. In this case, a depth (width in the measurement direction) of a region in the high-speed mode is 10 times a depth (width in the measurement direction) of a region in the normal mode. As described above, in the high-speed mode, the depth of the measurement target region is larger than that in the normal mode, and a frame rate can be increased by reducing the number of regions (the number of images acquired when the distance image is created). In the following description, the width Gw of the exposure period is twice the pulse width Lw of the light emission pulse ($Gw = 2Lw$).

<Processing in Normal Mode>

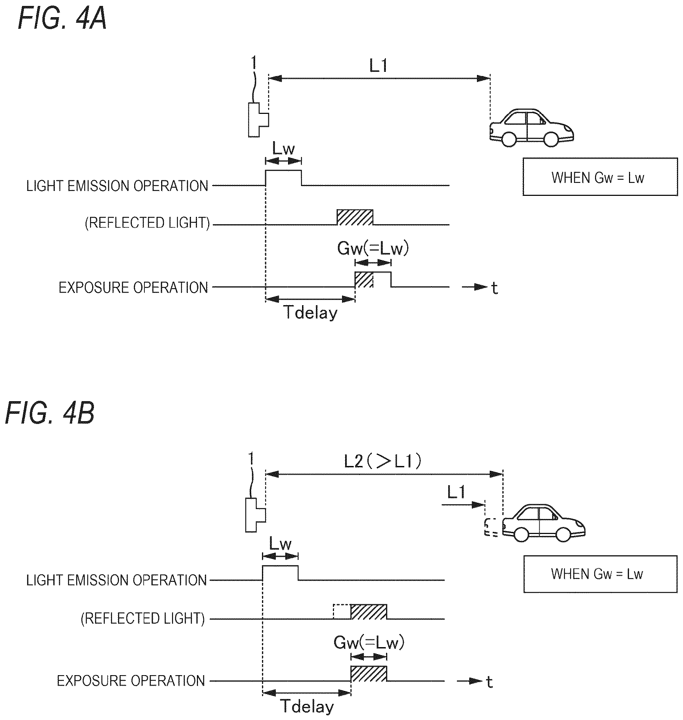

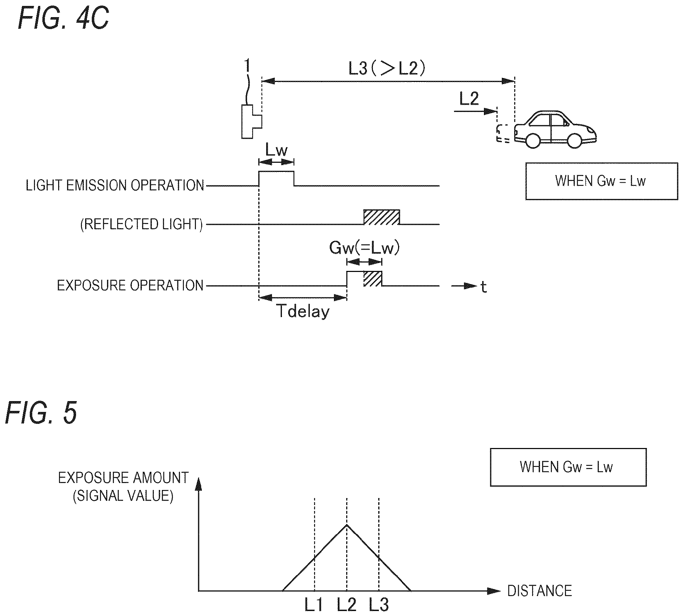

FIGS. 4A to 4C are diagrams showing a relation between a light emission operation and an exposure operation in the normal mode. FIG. 4A is a diagram showing a case in which an arrival time of reflected light is earlier than an exposure start timing (delay time Tdelay). FIG. 4B is a diagram showing a case in which the arrival time of the reflected light coincides with the exposure start timing (delay time Tdelay). FIG. 4C is a diagram showing a case in which the arrival time of the reflected light is later than the exposure start timing (delay time Tdelay). A horizontal axis of timing charts in FIGS. 4A to 4C indicates "time". As described above, the width Gw of the exposure period in the normal mode is equal to the pulse width Lw of the light emission pulse. Further, a pulse width of the reflected light is also denoted by Lw.

In FIG. 4B, when a distance to a target (vehicle) to be measured is L2, the arrival time of the reflected light coincides with the delay time Tdelay. At this time, an arrival period of the reflected light coincides with an exposure period of the imaging sensor 22, and the imaging sensor 22 can be exposed to all the reflected light, and thus an exposure amount reaches a peak. As shown in FIG. 4A, when a distance to the target is L1 (L1 < L2), as the target approaches L2 (see FIG. 4B) from L1, the overlap between the arrival period of the reflected light and the exposure period of the imaging sensor 22 increases, and the exposure amount gradually increases. In addition, as shown in FIG. 4C, when the distance to the target is L3 (L3 > L2), as the target moves away from L2 to L3, the overlap between the arrival period of the reflected light and the exposure period of the imaging sensor 22 decreases, and the exposure amount gradually decreases.

FIG. 5 is a diagram showing a relation between a distance to the target and an exposure amount in the normal mode. A horizontal axis of a graph in FIG. 5 indicates "distance", and a vertical axis indicates "exposure amount (signal value)", which correspond to a hatched portion area of the exposure operation in FIGS. 4A to 4C.

In the normal mode, the pulse width Lw of the light emission pulse and the width Gw of the exposure period are set to be equal ($Lw = Gw$), and thus the exposure amount reaches a maximum (peak) at the distance L2 at which the exposure to all the reflected light of the light emission pulse is performed as shown in FIG. 4B. In addition, as the target moves away from the distance L2, the exposure amount decreases. Accordingly, the graph showing the relation between the distance and the exposure amount in the normal mode is a "triangular shape" in which the exposure amount reaches a peak at a predetermined distance (here, the distance L2).

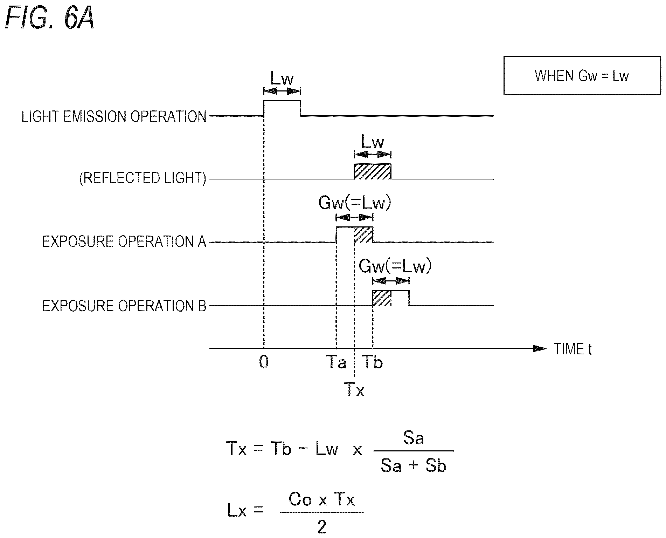

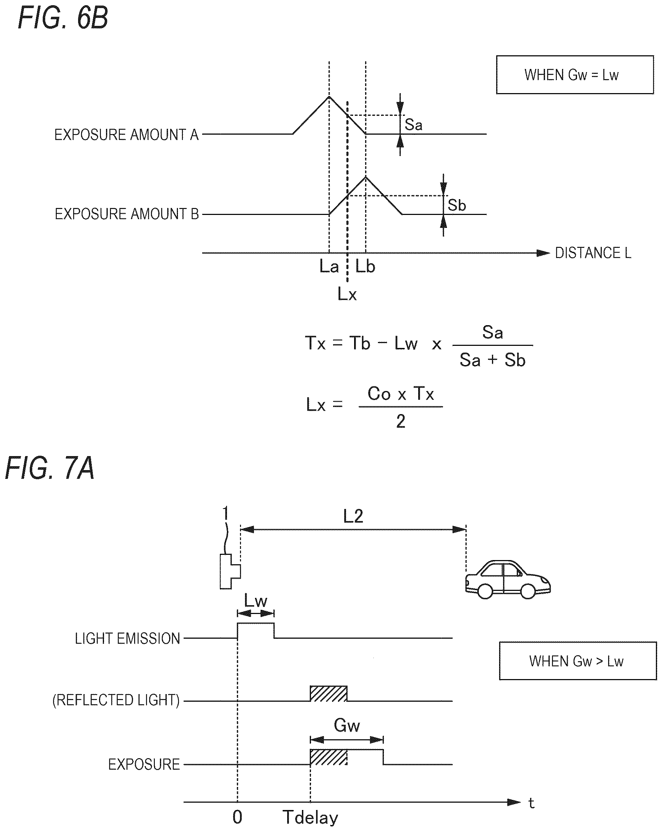

FIG. 6A is a diagram showing a relation between a light emission operation and exposure operations in the normal mode. FIG. 6B is a diagram showing a relation between an exposure amount and a distance for each of exposure operations A and B in FIG. 6A. A horizontal axis in FIG. 6A indicates time, and a horizontal axis in FIG. 6B indicates distance. A hatched portion area of a light emission pulse in FIG. 6A represents the "exposure amount", and the area is displayed as a vertical axis in the relation diagram of the exposure amount and the distance in FIG. 6B.

In FIG. 6A, a pulse width of the light emission pulse is Lw. A pulse width of reflected light is also denoted by Lw. Here, the exposure operation A and the exposure operation B are set.

In the exposure operation A, an exposure period (exposure period A) corresponding to a predetermined region (hereinafter, also referred to as one region) is set. A delay time of the exposure period A with respect to a start (time 0) of light emission of the light emission pulse is a delay time Ta (corresponding to Tdelay in FIG. 1B). A width of the exposure period in the exposure operation A is Gw (= Lw). The exposure period is a period in which a level of the exposure operation in FIG. 6A is a high level (H level).

In the exposure operation B, an exposure period (exposure period B) corresponding to a region (hereinafter, also referred to as the other region) continuous to the predetermined region in a measurement direction is set. A delay time of the exposure operation B with respect to a start (time 0) of light emission of the light emission pulse is Tb (corresponding to Tdelay in FIG. 1B: Tb = Ta + Lw). A width of the exposure period in the exposure operation B is also Gw (= Lw).

The timing control unit 32 sets such an exposure operation A and exposure operation B, and exposes each pixel of the imaging sensor 22 to the reflected light. The image acquisition unit 34 acquires signal values (here, signal values Sa and Sb shown in FIG. 6B) corresponding to the exposure amounts from the imaging sensor 22. The signal value Sa is a signal value corresponding to an exposure amount A when a distance to the target is Lx, and corresponds to a value (pixel data) of a pixel constituting image data (range image) of one region. In addition, the signal value Sb is a signal value corresponding to an exposure amount B when a distance to the target is Lx, and corresponds to a value (pixel data) of a pixel constituting image data (range image) of the other region.

In FIG. 6A, Tx is an arrival time (time of flight of light: ToF) from when the light source 12 emits light (light emission pulse) until reflected light reaches the imaging sensor 22. The arrival time Tx is calculated according to Tx = Tb - Lw × {Sa/(Sa + Sb) (1). The time calculation unit 36 calculates the arrival time Tx according to equation (1).

The distance Lx to the target is calculated based on the arrival time Tx. That is, the light travels twice the distance L during the arrival time Tx, and thus when a speed of the light is Co, Lx = (Co × Tx)/2...(2). The distance calculation unit 38 calculates the distance Lx for each pixel according to equation (2) using the arrival time Tx.

In FIG. 6B, when the distance Lx = La (in FIG. 6A, the arrival time Tx = Ta), the exposure amount A (signal value Sa) reaches a peak, and the exposure amount B (signal value Sb) is zero. Thereafter, as the distance Lx (arrival time Tx) increases, the exposure amount A (signal value Sa) decreases, and the exposure amount B (signal value Sb) increases. When the distance Lx = Lb (arrival time Tx = Tb), the exposure amount A (signal value Sa) becomes zero, and the exposure amount B (signal value Sb) reaches a peak. That is, a ratio of the signal value Sa corresponding to the exposure amount A to a total signal value (Sa + Sb) changes according to a change in the distance Lx (the arrival time Tx). With the relation, equation (1) is derived using the ratio of the signal value Sa. That is, the arrival time Tx in the normal mode is calculated by using the fact that a graph showing the relation between the distance and the exposure amount is a triangular shape.

The distance La at which the exposure amount A reaches a peak corresponds to La = Co × Ta/2. The distance Lb at which the exposure amount B reaches a peak corresponds to Lb = Co × Tb/2.

<Processing in High-speed Mode>

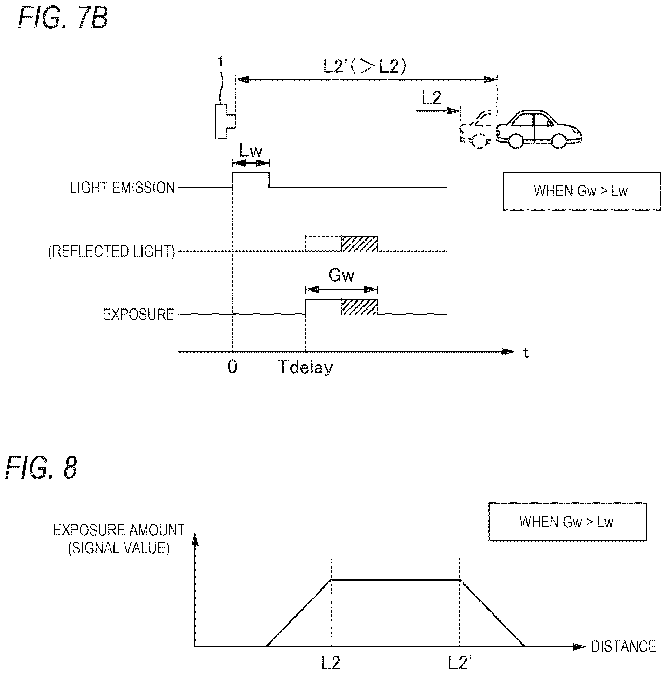

FIGS. 7A and 7B are diagrams showing processing in the high-speed mode. FIG. 7A is a diagram showing a case in which an arrival time of reflected light coincides with an exposure start timing (delay time Tdelay). FIG. 7B is a diagram showing a case in which the arrival time of the reflected light is later than the exposure start timing (delay time Tdelay). In FIG. 7B, an arrival completion time of the reflected light coincides with an exposure end timing. A horizontal axis of timing charts in FIGS. 7A and 7B indicates "time".

In the high-speed mode, as described above, the exposure width Gw is set to be larger than the pulse width Lw of the light emission pulse (Gw > Lw: here, Gw = 2Lw). In addition, the pulse width of the reflected light is denoted by Lw.

Since Gw is larger than Lw, both when a distance to the target is L2 (FIG. 7A) and when a distance to the target is L2' (FIG. 7B), the arrival period of the reflected light is included in the exposure period of the imaging sensor 22, and thus the imaging sensor 22 is exposed to all the reflected light. That is, the exposure amount is the same both when the distance to the target is L2 and when the distance to the target is L2'.

FIG. 8 is a diagram showing a relation between a distance to the target and an exposure amount in the high-speed mode. A horizontal axis of a graph in FIG. 8 indicates "distance".

As shown in FIG. 8, when the distance is smaller than L2, the exposure amount increases as the target approaches the distance L2. At a distance from L2 to L2', the imaging sensor 22 is exposed to all the reflected light, and thus the exposure amount is constant. When the distance is larger than L2', the exposure amount decreases as the target moves away from the distance L2'. Accordingly, in the high-speed mode, the exposure width Gw is set to be larger than the pulse width Lw of the light emission pulse (Gw > Lw), and thus the exposure amount is constant in a predetermined range (here, a range of the distance from L2 to L2') as shown in FIG. 8, and a graph showing the relation between the distance and the exposure amount is a "trapezoidal shape".

That is, only by the exposure operation shown in FIGS. 7A and 7B, the exposure amount does not change at the distance from L2 to L2' (that is, the range of the distance from L2 to L2' is a dead zone). Accordingly, by simply setting the exposure width Gw to be long for the high-speed mode, the arrival time Tx or the distance Lx cannot be calculated by using the indirect ToF similar to the normal mode. However, it is difficult to change the pulse width Lw of the emitted light due to restrictions on a structure and a cost of the light source. For example, heat is locally concentrated at the time of light emission (on the time axis), and thus it is necessary to define a light emission duty or the light emission pulse width, and it is difficult to extend (change) the light emission pulse width Lw.

Therefore, in the present embodiment, the following measurement is performed in the high-speed mode.

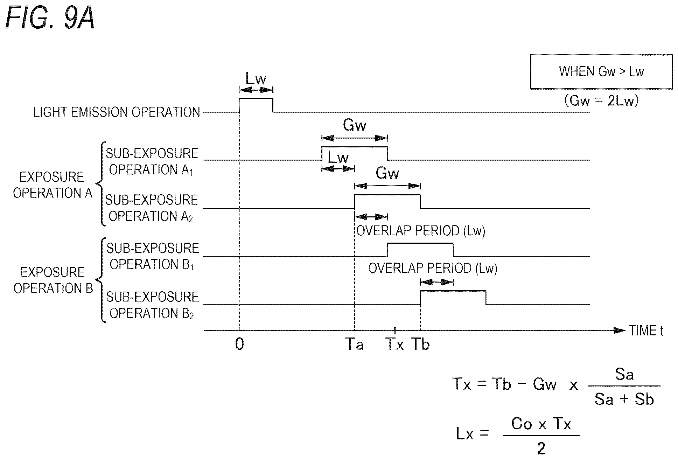

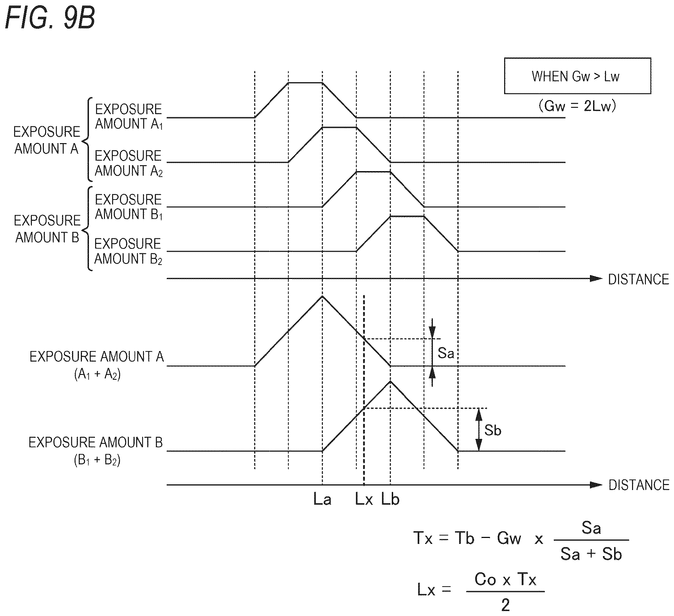

FIG. 9A is a timing chart of a light emission operation and exposure operations in the high-speed mode. FIG. 9B is a diagram showing a relation between a distance to the target and an exposure amount. A horizontal axis in FIG. 9A indicates "time", and a horizontal axis in FIG. 9B indicates "distance".

As shown in FIG. 9A, the timing control unit 32 of the control unit 30 according to the present embodiment sets a plurality of (here, two) sub-exposure operations (sub-exposure periods) longer than the pulse width Lw as the exposure operation (exposure period). More specifically, the timing control unit 32 sets two sub-exposure operations (sub-exposure periods) having different start timings so as to have an overlap period corresponding to the pulse width Lw of the light emission pulse. For example, in the case of the exposure operation A, the timing control unit 32 sets a sub-exposure operation $A_1$ and a sub-exposure operation $A_2$. Exposure widths of the sub-exposure operation $A_1$ and the sub-exposure operation $A_2$ are Gw (= 2Lw). Start timings of the sub-exposure operation $A_1$ and the sub-exposure operation $A_2$ are different from each other by a time corresponding to the pulse width Lw. Accordingly, an overlap period corresponding to the pulse width Lw of the light emission pulse is provided in an exposure period (sub-exposure period $A_1$) of the sub-exposure operation $A_1$ and an exposure period (sub-exposure period $A_2$) of the sub-exposure operation $A_2$.

Similarly, the timing control unit 32 sets two sub-exposure operations (sub-exposure operation $B_1$ and sub-exposure operation $B_2$) for the exposure operation B. Exposure widths of the sub-exposure operation $B_1$ and the sub-exposure operation $B_2$ are Gw (= 2Lw). Start timings of the sub-exposure operation $B_1$ and the sub-exposure operation $B_2$ are different from each other by a time corresponding to the pulse width Lw. Accordingly, an overlap period corresponding to the pulse width Lw of the light emission pulse is provided in an exposure period (sub-exposure period $B_1$) of the sub-exposure operation $B_1$ and an exposure period (sub-exposure period $B_2$) of the sub-exposure operation $B_2$.

The timing control unit 32 causes each pixel of the imaging sensor 22 to perform two sub-exposure operations and exposes each pixel to reflected light. The two sub-exposure operations are repeatedly performed as described later. Each pixel of the imaging sensor 22 outputs a signal value corresponding to a total exposure amount in the exposure periods of the two sub-exposure operations. As shown in FIG. 9B, for example, each pixel of the imaging sensor 22 outputs a signal value Sa corresponding to an exposure amount A (= $A_1$ + $A_2$) obtained by summing an exposure amount $A_1$ in the sub-exposure period $A_1$ and an exposure amount $A_2$ in the sub-exposure period $A_2$ as a signal value according to the exposure operation A.

A relation between a distance and the exposure amount $A_1$ in the sub-exposure operation $A_1$ is a trapezoidal shape as in FIG. 8, and a relation between a distance and the exposure amount $A_2$ in the sub-exposure operation $A_2$ is a trapezoidal shape with a timing shifted by Lw from the exposure amount $A_1$. The exposure amount A (of a sum of the exposure amount $A_1$ and the exposure amount $A_2$) obtained by adding the exposure amount $A_1$ and the exposure amount $A_2$ is a triangular shape as shown in FIG. 9B. Similarly, a relation between a distance and an exposure amount $B_1$ in the sub-exposure operation $B_1$ is a trapezoidal shape, and a relation between a distance and an exposure amount $B_2$ in the sub-exposure operation $B_2$ is a trapezoidal shape with a timing shifted by Lw from the exposure amount $B_1$. The exposure amount B (of a sum of the exposure amount $B_1$ and the exposure amount $B_2$) obtained by adding the exposure amount $B_1$ and the exposure amount $B_2$ is a triangular shape with a timing shifted from the exposure amount A as shown in FIG. 9B.

As described above, by providing two sub-exposure operations (sub-exposure operations $A_1$ and $A_2$ and sub-exposure operations $B_1$ and $B_2$) as the exposure operations A and B, respectively, a relation between the exposure amount A and the exposure amount B becomes the same relation as in FIG. 6B. That is, when the exposure amount A reaches a maximum (peak), the exposure amount B is zero, and the exposure amount A decreases and the exposure amount B increases as the distance Lx increases. When the exposure amount B reaches a peak, the exposure amount A becomes zero. As shown in FIGS. 9A and 9B, when an arrival time of the reflected light having the width Lw (delay time with respect to the emission of the light emission pulse) is a start timing Ta of the sub-exposure operation $A_2$ (start timing of the overlap period), both the exposure amounts $A_1$ and $A_2$ become maximum values, and the exposure amount A reaches a peak. In addition, when an arrival time of the reflected light having the width Lw (delay time with respect to the emission of the light emission pulse) is a start timing Tb of the sub-exposure operation $B_2$ (start timing of the overlap period), both the exposure amounts $B_1$ and $B_2$ become maximum values, and the exposure amount B reaches a peak.

The image acquisition unit 34 acquires, for each pixel, a signal value corresponding to an amount of light to which each pixel is exposed in the exposure period, based on the output of the imaging sensor 22. Here, the image acquisition unit 34 acquires, for each pixel, the signal value Sa corresponding to the exposure amount A ($= A_1 + A_2$) obtained by summing the exposure amount $A_1$ in the sub-exposure period $A_1$ and the exposure amount $A_2$ in the sub-exposure period $A_2$ as the signal value corresponding to the exposure amount in the exposure period A. In addition, the image acquisition unit 34 acquires, for each pixel, the signal value Sb corresponding to the exposure amount B ($= B_1 + B_2$) obtained by summing the exposure amount $B_1$ in the sub-exposure period $B_1$ and the exposure amount $B_2$ in the sub-exposure period $B_2$ as the signal value corresponding to the exposure amount in the exposure period B.

The time calculation unit 36 calculates the arrival time Tx according to the following equation (3) based on the relation.

$$Tx = Tb - Gw \times \{Sa/(Sa + Sb)\}...(3)$$

Here, Gw: a width of a sub-light receiving period (here, Gw = 2Lw)

Sa: a signal value corresponding to one region
Sb: a signal value corresponding to the other region
Tb: a time from the emission of the light emission pulse to a start timing of the overlap period of the exposure operation B

As shown in equation (3), the time calculation unit 36 calculates the arrival time Tx based on the ratio of the signal value Sa corresponding to one region to the total signal value (Sa + Sb) corresponding to the two regions and the start timing Tb of the overlap period of the two sub-exposure periods $B_1$ and $B_2$ corresponding to the other region. Accordingly, the arrival time Tx can also be calculated in the high-speed mode.

Similar to the normal mode, the distance calculation unit 38 calculates the distance Lx according to equation (2) using the arrival time Tx. The distance La at which the exposure amount A reaches a peak corresponds to La = Co × Ta/2. The distance Lb at which the exposure amount B reaches a peak corresponds to Lb = Co × Tb/2.

As described above, the control unit 30 (timing control unit 32) according to the present embodiment sets two sub-exposure operations (sub-exposure periods) having different start timings and having the same overlap period as the pulse width Lw in the high-speed mode. Accordingly, in the high-speed mode in which the exposure width Gw is larger than the pulse width Lw of the light emission pulse, a waveform of a triangular exposure amount can also be created, and the arrival time Tx or the distance Lx can also be calculated. Therefore, a frame rate can be increased.

<Imaging Sensor 22>

When there is one measurable region for once light emission, it takes time to acquire image data on a large number of regions, so that a measurement time becomes long (it is difficult to increase a speed of FPS). Therefore, a plurality of (here, four) exposure periods are set for once light emission, and a plurality of ((here, four)) regions are measured for once light emission. Here, a multi-tap (four-tap) CMOS image sensor is used as the imaging sensor 22. However, the imaging sensor 22 is not limited to the multi-tap CMOS image sensor. The number of measurable regions for once light emission may be one.

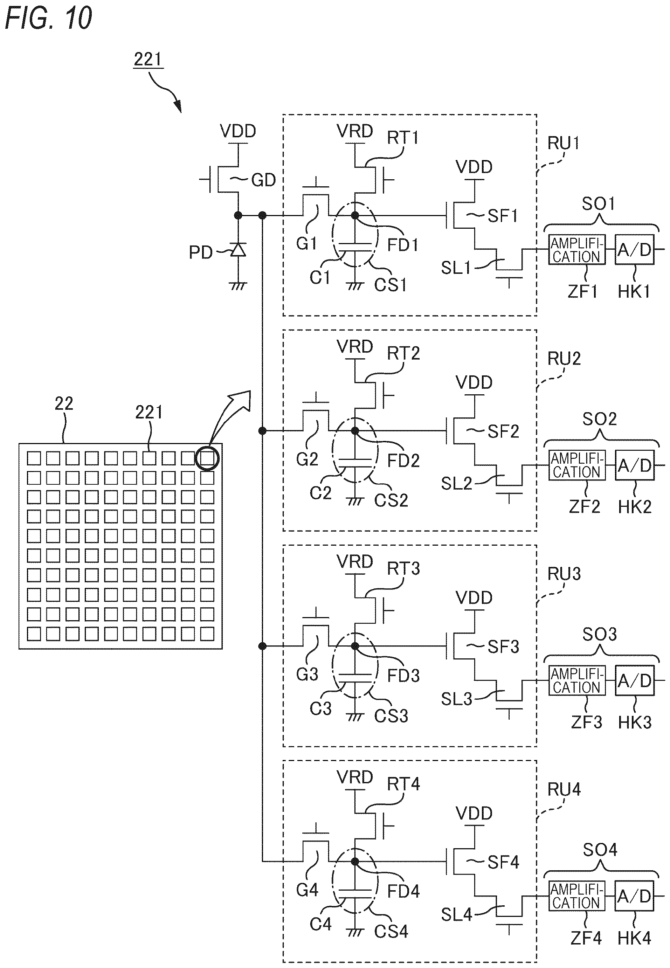

FIG. 10 is a diagram showing a configuration example of the four-tap imaging sensor 22.

As shown in FIG. 10, a plurality of pixels 221 are two-dimensionally arranged (for example, 640 × 480) in the imaging sensor 22. One light receiving element PD and a plurality of (here, four) signal reading units RU1 to RU4 corresponding to the one light receiving element PD are provided in each pixel 221. The signal reading units RU1 to RU4 have the same configuration (only reference numerals of components are different). In the following description, the signal reading unit is mainly described using the signal reading unit RU1.

The light receiving element PD is an element (for example, a photodiode) that generates charges corresponding to an exposure amount.

The signal reading unit RU1 includes a storage unit CS1, a transistor G1, a reset transistor RT1, a source follower transistor SF1, and a selection transistor SL1.

The storage unit CS1 is implemented by a storage capacitor C1 for storing charges generated in the light receiving element PD, and is generally called a floating diffusion (FD).

The transistor G1 is provided between the light receiving element PD and the storage unit CS1. The transistor G1 is turned on in a predetermined exposure period (for example, the exposure period A to be described later) and supplies the charges generated in the light receiving element PD to the storage unit CS1 based on an instruction from the timing control unit 32 of the control unit 30. Similarly, transistors G2 to G4 supply the charges generated in the light receiving element PD to storage units CS2 to CS4, respectively, based on instructions from the timing control unit 32. That is, the transistors G1 to G4 correspond to a "drive circuit" that distributes the charges generated in the light receiving element PD to the storage units CS1 to CS4 according to the exposure periods.

In this way, the imaging sensor 22 according to the present embodiment can divide and store the charges generated in the four exposure periods in the storage units (CS1 to CS4) corresponding to each exposure period.

In the normal mode, the charges are repeatedly stored in each storage unit in the corresponding exposure period. The charges stored in each storage unit correspond to an amount of light to which the light receiving element PD is exposed in each exposure period. A signal value is output based on the charges stored in each storage unit. The signal value based on the charges stored in the storage unit is a signal value corresponding to the exposure amount in each exposure period.

On the other hand, in the high-speed mode, the charges are repeatedly stored in each storage unit in the corresponding two sub-exposure periods. The charges stored in each storage unit correspond to an amount of light to which the light receiving element PD is exposed in the two sub-exposure periods. A signal value is output based on the charges stored in each storage unit. The signal value based on the charges stored in the storage unit is a signal value corresponding to a sum of the exposure amounts in the two sub-exposure periods. It is also possible to cause each of the storage units to perform sub exposure (storage of the charges), read out the signal values of the storage units, and then add the signal values.

By using such an imaging sensor 22, four regions can be measured by imaging once. That is, by using the imaging sensor 22, images of four regions (zones) can be captured by one imaging, and four range images (subframes) can be obtained.

(Measurement of Normal Mode)

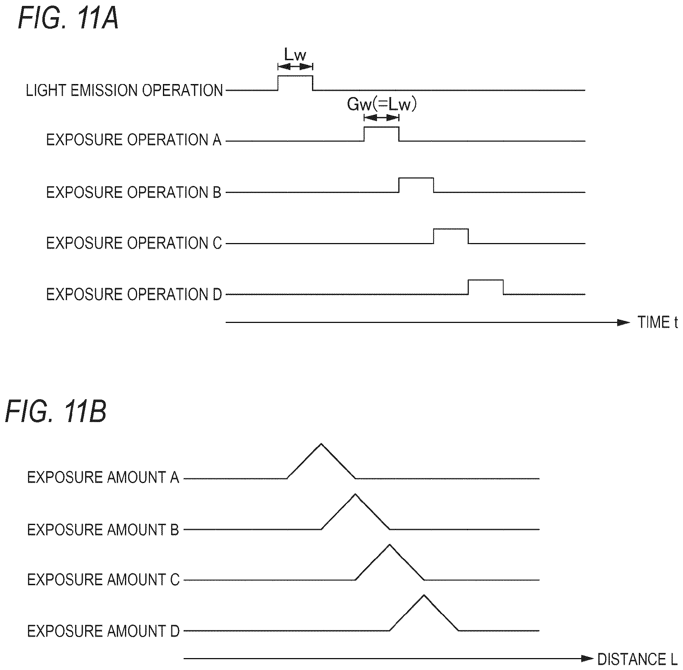

FIG. 11A is a timing chart of a light emission operation and light receiving operations in the normal mode when the four-tap imaging sensor 22 is used. FIG. 11B is a diagram showing a relation between a distance to the target and an exposure amount. A horizontal axis in FIG. 11A indicates time, and a horizontal axis in FIG. 11B indicates distance.

In this example, exposure operations A to D (exposure periods A to D) are set. In addition, in the normal mode, as described above, the width Gw of each exposure period is equal to the pulse width Lw of the light emission pulse (Gw = Lw). The exposure periods are periods in which a level of the exposure (exposure operations) in FIG. 11A is an H level. In addition, H/L levels of the exposure operations A to D indicate whether the transistors G1 to G4 in FIG. 10 are turned on or off. For example, the transistor G1 is turned on in an H-level period (exposure period A) of the exposure operation A, and the charges generated in the light receiving element PD are stored in the storage capacitor C1 of the storage unit CS1. In addition, the transistor G2 is turned on in an H-level period (exposure period B) of the exposure operation B, and the charges generated in the light receiving element PD are stored in a storage capacitor C2 of the storage unit CS2. Similarly, in the exposure period C, charges generated in the light receiving element PD are stored in a storage capacitor C3 of the storage unit CS3, and in the exposure period D, charges generated in the light receiving element PD are stored in a storage capacitor C4 of the storage unit CS4.

In the exposure operation A, a region (here, the region 1) defined by a delay time (Tdelay in FIG. 1B) and the exposure width Gw (= Lw) with respect to a start of light emission of the light emission pulse is measured. In the exposure operation B, a region (region 2) next to the region 1 is measured. In the exposure operation C, a region (region 3) next to the region 2 is measured, and in the exposure operation D, a region (region 4) next to the region 3 is measured.

As shown in FIG. 11B, exposure amounts A to D have triangular shapes corresponding to the exposure operations (exposure periods) A to D, respectively. This is the same as FIG. 6B, and thus the description thereof is omitted.

In FIGS. 11 and 11B, the description is made based on one exposure for the sake of description, but actually, the exposure is repeated n times. The charges corresponding to the exposure amount are repeatedly stored in each storage unit (storage units CS1 to CS4) of the imaging sensor 22. Signal output units SO1 to SO4 for the pixel 221 of the imaging sensor 22 respectively output signal values Sa to Sd according to the charges stored in the storage units CS1 to CS4. The signal values Sa to Sd correspond to values (pixel data) of the pixel constituting image data on images (range images) of the regions 1 to 4, respectively.

The image acquisition unit 34 of the control unit 30 acquires the signal values Sa to Sd (signal values according to the charges stored in the storage units CS1 to CS4) of each pixel 221 from the imaging sensor 22. Accordingly, the image acquisition unit 34 acquires the image data on the regions 1 to 4. Similarly, the image acquisition unit 34 acquires the image up to the region N (entire-region image).

The time calculation unit 36 of the control unit 30 calculates the arrival time Tx of the reflected light. Specifically, first, the time calculation unit 36 specifies a signal value S of exposure to the reflected light from the signal values S up to the region N. For example, the time calculation unit 36 specifies a signal value of a signal corresponding to two consecutive exposure periods (in other words, two consecutive regions) and having the highest exposure amount. For example, when a signal value corresponding to an exposure period i in which the reflected light starts exposure is $S_i$, two signal values $S_i$ and $S_{i+1}$ are specified. For example, when the imaging sensor 22 is exposed to the reflected light in the exposure period B and the exposure period C, the signal values Sb and Sc correspond to the signal values $S_i$ and $S_{i+1}$

obtained by exposing the imaging sensor 22 to the reflected light.

The time calculation unit 36 uses the signal values $S_i$ and $S_{i+1}$ to calculate the flight time (hereinafter also referred to as an arrival time) Tx of the light according to the following equation (4).

$$Tx = T_{i+1} - Lw \times \{S_i/(S_i + S_{i+1})\}...(4)$$

The distance calculation unit 38 calculates the distance Lx to the target according to the above-mentioned equation (2) using the arrival time Tx.

(Measurement of High-speed Mode)

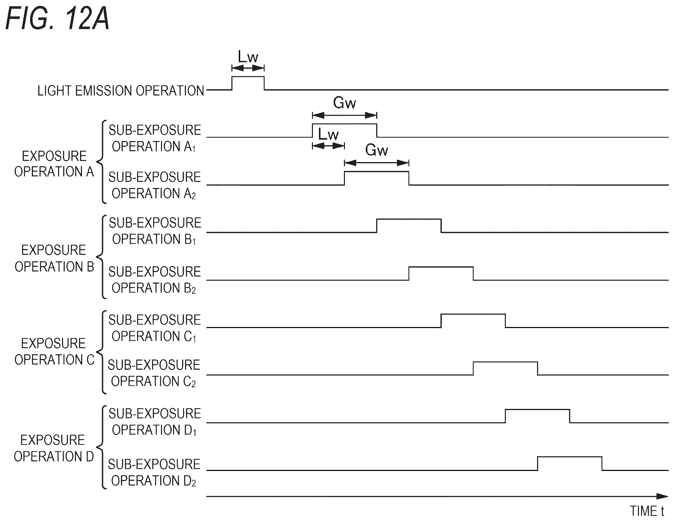

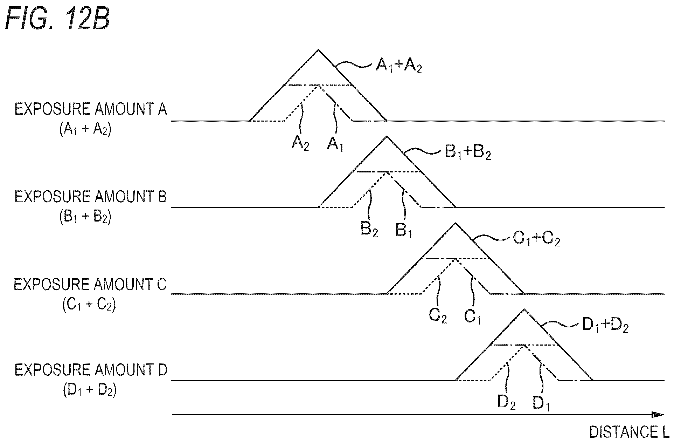

FIG. 12A is a timing chart of a light emission operation and light receiving operations in the high-speed mode when the four-tap imaging sensor 22 is used. FIG. 12B is a diagram showing a relation between a distance to the target and an exposure amount. A horizontal axis in FIG. 12A indicates time, and a horizontal axis in FIG. 12B indicates distance.

In this example, the exposure operations A to D are provided, and two sub-exposure operations (sub-exposure periods) having different start timings are provided for each exposure operation in the same manner as in FIG. 9A. In the high-speed mode, the width Gw of the sub-exposure period is larger than the pulse width Lw of the light emission pulse (here, Gw = 2Lw).

The two sub-exposure periods are provided to have an overlap period corresponding to the pulse width Lw of the light emission pulse. In this case, the relation between a distance and an exposure amount in each exposure operation (two sub-exposure operations) is a triangular shape as shown in FIG. 12B. In FIG. 12B, an exposure amount (exposure amounts $A_1$ to $D_1$) corresponding to one sub-exposure period (sub-exposure periods $A_1$ to $D_1$) is indicated by a dashed line, an exposure amount (exposure amounts $A_2$ to $D_2$) corresponding to the other sub-exposure period (sub-exposure periods $A_2$ to $D_2$) is indicated by a broken line, and a total exposure amount (exposure amounts A to D) of the two sub-exposure periods is indicated by a solid line.

In the examples shown in FIGS. 12A and 12B, the exposure amounts (exposure amounts A to D) are triangular shapes, and thus the arrival time Tx and the distance Lx to the target can be calculated in the same manner as in FIGS. 9A and 9B. That is, the time calculation unit 36 specifies the signal value $S_i$ and $S_{i+1}$ (for example, Sa and Sb) corresponding to the two consecutive exposure periods and having the highest exposure amount, and obtains the arrival time Tx according to equation (3) using the signal values and the start timing (Tb) of the overlap period of the sub-exposure periods. In addition, the distance calculation unit 36 calculates the distance Lx according to equation (2) using the arrival time Tx.

As described above, when the four-tap imaging sensor 22 is used, four regions can be measured by one imaging, and the frame rate can be further increased.

In FIG. 12A, for the sake of description, two sub-exposure operations (for example, the sub-exposure operation $A_1$ and the sub-exposure operation $A_2$) for each exposure operation are shown side by side, but actually, the two sub-exposure operations are alternately performed.

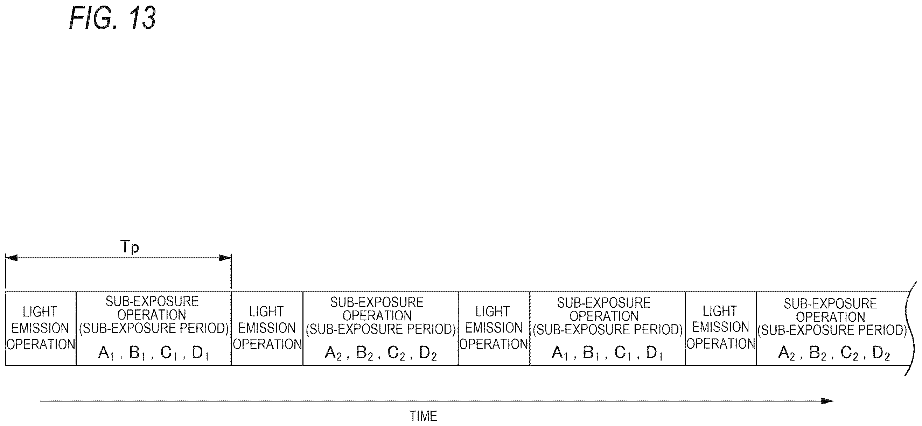

FIG. 13 is a diagram showing that the sub-exposure operations (sub-exposure periods) are alternately performed. A horizontal axis in FIG. 13 indicates time.

As shown in FIG. 13, the timing control unit 32 causes the light source 12 to perform a light emission operation in the period Tp, and causes the imaging sensor 22 to alternately perform one of the sub-exposure operations (sub-exposure periods) $A_1$ to $D_1$ and the corresponding one of the sub-exposure operations (sub-exposure periods) $A_2$ to $D_2$. In this manner, the timing control unit 32 alternately repeats the two sub-exposure periods and causes the storage units CS1 to CS4 of each pixel 221 of the imaging sensor 22 to store the charges. Accordingly, the number of times the charges are stored in the two sub-exposure periods can be made equal.

The image acquisition unit 34 acquires a signal value corresponding to a sum of the exposure amounts of the pixels 221 in the two sub-exposure periods (sum of the charges stored in the storage units CS1 to CS4).

Here, the two sub-exposure operations (sub-exposure periods) are alternately performed, and the present invention is not limited thereto. For example, one sub-exposure operation may be repeated a predetermined number of times, and then the other sub-exposure operation may be repeated the predetermined number of times. However, as compared with the case in which one of the sub-exposure operations (sub-exposure periods) $A_1$ to $D_1$ is performed a plurality of times and then the corresponding one of sub-exposure operations (sub-exposure periods) $A_2$ to $D_2$ is performed a plurality of times, it is possible to disperse the influence of the variation of the distance to the target during the measurement in a case in which one of the sub-exposure operations (sub-exposure periods) $A_1$ to $D_1$ and the corresponding one of the sub-exposure operations (sub-exposure period) $A_2$ to $D_2$ are alternately performed a plurality of times, and thus a measurement accuracy can be improved.

<Modification>

In the present embodiment, two sub-exposure operations (sub-exposure periods) are provided for each exposure operation, and the number of sub-exposure operations (sub-exposure periods) is not limited to two as long as there are a plurality of sub-exposure operations. For example, three sub-exposure operations (sub-exposure periods) may be provided for each exposure operation.

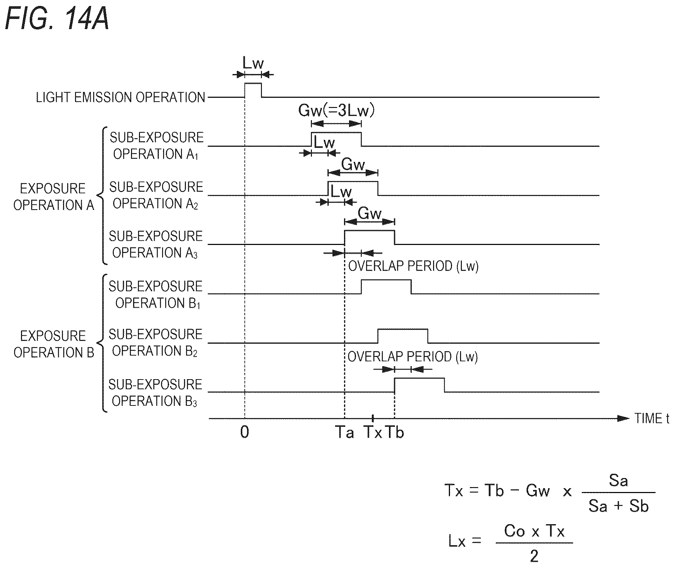

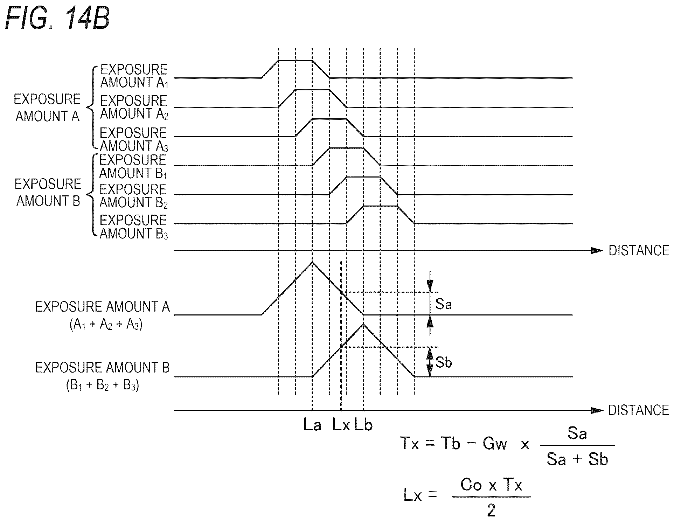

FIG. 14A is a timing chart of a light emission operation and exposure operations when there are three sub-exposure operations. FIG. 14B is a diagram showing a relation between a distance and an exposure amount when there are three sub-exposure operations. A horizontal axis in FIG. 14A indicates time, and a horizontal axis in FIG. 14B indicates distance.

In this example, the timing control unit 32 sets three sub-exposure operations (sub-exposure periods) $A_1$ to $A_3$ having different start timings as the exposure operation A. As shown in FIG. 14A, the width Gw of each exposure period is set to be larger (here, three times) than the light emission pulse width Lw (Gw = 3Lw). The start timings of the three sub-exposure periods are different from each other by a time corresponding to the pulse width Lw. The three sub-exposure periods $A_1$ to $A_3$ are provided with overlap periods corresponding to the pulse width Lw of the light emission pulse.

Similarly, the timing control unit 32 sets three sub-exposure operations (sub-exposure periods) $B_1$ to $B_3$ for the exposure operation B (description will be omitted).

In this case, a relation between a distance and an exposure amount in the sub-exposure operations $A_1$ to $A_3$ is a trapezoidal shape with a timing shifted by Lw as shown in FIG. 14B. The exposure amount A (of a sum of the exposure amounts $A_1$ to $A_3$) obtained by adding the exposure amounts $A_1$ to $A_3$ is a triangular shape as shown in FIG. 14B. In addition, the exposure amount B (of a sum of the exposure amounts $B_1$ to $B_3$) obtained by adding the exposure amounts $B_1$ to $B_3$ is a triangular shape with a timing shifted from the exposure amount A, and the exposure amount A and the exposure amount B have the same relation as that of FIG. 9B.

As described above, in the case in which there are three sub-exposure operations, when a time from the emission of the light emission pulse to a start timing of the overlap period of the exposure operation B is Tb, the arrival time Tx can be similarly calculated according to

$$Tx = Tb - Gw \times \{Sa/(Sa + Sb)\}$$

The distance Lx can also be calculated according to the equation (2).

= = = = = Summary = = = = =

The measurement device 1 according to the present embodiment has been described above. The measurement device 1 includes the light emitting unit 10 that emits a light emission pulse (pulsed light), the imaging sensor 22, the timing control unit 32, and the image acquisition unit 34. The imaging sensor 22 outputs a signal value corresponding to the exposure amount for each pixel. The timing control unit 32 sets an exposure period corresponding to the measurement target region, and causes the pixels of the imaging sensor 22 to be exposed to the reflected light in the exposure period. The image acquisition unit 34 acquires a signal value corresponding to the exposure amount of the pixel in the exposure period based on the output of the imaging sensor 22. With such a configuration, the timing control unit 32 sets a plurality of (for example, two) sub-exposure periods longer than the pulse width Lw of the light emission pulse as the exposure period. Specifically, a plurality of sub-exposure periods having different start timings are set so as to have an overlap period corresponding to the pulse width Lw of the light emission pulse. The timing control unit 32 causes the pixels 221 of the imaging sensor 22 to be exposed to the reflected light in each sub-exposure period. The image acquisition unit 34 acquires a signal value corresponding to a sum of exposure amounts of the pixels 221 in the plurality of sub-exposure periods. Accordingly, in the high-speed mode in which the width Gw of the exposure period is larger than the pulse width Lw of the light emission pulse, a relation between a distance and an exposure amount can also be made triangular. Accordingly, the measurement device 1 can also measure the arrival time of the reflected light or the distance to the target in the high-speed mode, and the frame rate can be increased.

The measurement device 1 further includes the time calculation unit 36 that calculates the arrival time Tx of the reflected light based on the signal values corresponding to the two consecutive regions. Accordingly, the arrival time Tx can be obtained. The distance Lx to the target can also be obtained based on the arrival time Tx.

The time calculation unit 36 calculates the arrival time Tx based on the ratio of the signal value Sa corresponding to one region to the total signal value (Sa + Sb) corresponding to the two regions and the start timing Tb of the overlap period of the two sub-exposure periods corresponding to the other region. Accordingly, the arrival time Tx can also be obtained in the high-speed mode.

More specifically, when the width of the sub-exposure period is Gw, the signal value corresponding to one of the regions is Sa, the signal value corresponding to the other region is Sb, and the time from emission of the pulsed light to the start timing of the overlap period is Tb, the time calculation unit 36 calculates the arrival time Tx according to Tx = Tb - Gw $\times$ {Sa/(Sa + Sb)}. Accordingly, the arrival time Tx can be obtained.

The width Gw of the sub-exposure period is an integral multiple of the pulse width Lw of the light emission pulse. Accordingly, by varying the start timing of the sub-exposure period by the pulse width Lw, a plurality of sub-exposure periods can be set so as to have an overlap period corresponding to the pulse width Lw (as a result, the graph showing the relation between the distance and the exposure amount is a triangular shape).

The imaging sensor 22 includes, for each pixel 221, the light receiving element PD that generates charges corresponding to the exposure amount and the storage units CS that store the generated charges. The imaging sensor 22 causes the storage unit CS (for example, the storage unit CS1) to store the charges generated in the light receiving element PD in a certain sub-exposure period (for example, the sub-exposure period $A_1$) and the charges generated in the light receiving element PD in another sub-exposure period (for example, the sub-exposure period $A_2$) having a different start timing, and outputs a signal value (for example, the signal value Sa) corresponding to the charges stored in the storage unit CS. Accordingly, the signal values corresponding to the exposure amounts in the two sub-exposure periods can be acquired.

The imaging sensor 22 alternately and repeatedly stores, in the storage unit CS, the charges generated in the light receiving element PD in the certain sub-exposure period and the charges generated in the light receiving element PD in the other sub-exposure period. The imaging sensor 22 outputs the signal value corresponding to the charges stored in the storage unit CS. Accordingly, the influence of the variation in the distance to the target during measurement can be dispersed, and the measurement accuracy can be improved.

The imaging sensor 22 includes the four storage units CS1 to CS4 and the transistors G1 to G4 that distribute and store the charges in the respective storage units CS1 to CS4 according to the exposure periods. The charges generated by one light emission pulse are distributed and stored in the respective storage units CS1 to CS4 according to the exposure periods. Accordingly, the frame rate can be further increased.

The embodiments described above are intended to facilitate understanding of the present disclosure, and are not to be construed as limiting the present disclosure. In addition, it is needless to say that the present disclosure can be changed or improved without departing from the gist thereof, and equivalents thereof are included in the present disclosure.

REFERENCE SIGNS LIST

As described above, the following matters are disclosed in the present specification.

(1) A measurement device including:

a light emitting unit configured to emit pulsed light;
an imaging sensor configured to output a signal value corresponding to an exposure amount for each pixel;
a timing control unit configured to set an exposure period corresponding to a measurement target region and cause the pixel of the imaging sensor to be exposed to reflected light in the exposure period; and
a signal acquisition unit configured to acquire a signal value corresponding to the exposure amount of the pixel in the exposure period based on an output of the imaging sensor, in which the timing control unit sets, as the exposure period, a plurality of sub-exposure periods that are longer than a width of the pulsed light and have different start timings so as to have an overlap period corresponding to the width of the pulsed light, and causes the pixel of the imaging sensor to be exposed to the reflected light in each of the sub-exposure periods, and the signal acquisition unit acquires the signal value corresponding to a sum of exposure amounts of the pixel in the plurality of sub-exposure periods.

(2) The measurement device according to (1), further including: a calculation unit configured to calculate an arrival time of the reflected light based on signal values corresponding to two consecutive regions.
(3) The measurement device according to (2), in which the calculation unit calculates the arrival time based on a ratio of the signal value corresponding to one of the regions to a sum of the signal values corresponding to the two regions and a start timing of the overlap period of the plurality of sub-exposure periods corresponding to the other region.
(4) The measurement device according to (3), in which

when a width of the sub-exposure period is Gw,

the signal value corresponding to one of the regions is Sa,
the signal value corresponding to the other region is Sb, and
a time from emission of the pulsed light to the start timing of the overlap period is Tb,

the calculation unit calculates the arrival time Tx according to $Tx = Tb - Gw \times \{Sa/(Sa + Sb)\}$.

(5) The measurement device according to any one of (1) to (4), in which the sub-exposure period is an integral multiple of the width of the pulsed light.
(6) The measurement device according to any one of (1) to (5), in which the imaging sensor

includes a light receiving element that generates charges corresponding to an exposure amount for each pixel and a storage unit that stores the charges, and
causes the storage unit to store the charges generated in the light receiving element in a certain sub-exposure period and the charges generated in the light receiving element in another sub-exposure period having a different start timing, and outputs a signal value corresponding to the charges stored in the storage unit.

(7) The measurement device according to (6), in which
the imaging sensor causes the storage unit to alternately and repeatedly store the charges generated in the light receiving element in the certain sub-exposure period and the charges generated in the light receiving element in the other sub-exposure period having a different start timing, and outputs the signal value corresponding to the charges stored in the storage unit.
(8) The measurement device according to (6) or (7), in which
the imaging sensor

> includes a plurality of the storage units, and a drive circuit that distributes and stores the charges to the respective storage units according to the exposure periods, and
> distributes and stores the charges generated by one pulsed light to the respective storage units according to the exposure periods.

The present application is based on the Japanese patent application (JP2022-014089A) filed on February 1, 2022, and the contents thereof are incorporated herein by reference.

**Claims**

1. A measurement device comprising:

> a light emitting unit configured to emit pulsed light;
> an imaging sensor configured to output a signal value corresponding to an exposure amount for each pixel;
> a timing control unit configured to set an exposure period corresponding to a measurement target region and cause the pixel of the imaging sensor to be exposed to reflected light in the exposure period; and
> a signal acquisition unit configured to acquire a signal value corresponding to the exposure amount of the pixel in the exposure period based on an output of the imaging sensor, wherein
> the timing control unit sets, as the exposure period, a plurality of sub-exposure periods that are longer than a width of the pulsed light and have different start timings so as to have an overlap period corresponding to the width of the pulsed light, and causes the pixel of the imaging sensor to be exposed to the reflected light in each of the sub-exposure periods, and
> the signal acquisition unit acquires the signal value corresponding to a sum of exposure amounts of the pixel in the plurality of sub-exposure periods.

2. The measurement device according to claim 1, further comprising:
a calculation unit configured to calculate an arrival time of the reflected light based on signal values corresponding to two consecutive regions.

3. The measurement device according to claim 2, wherein
the calculation unit calculates the arrival time based on a ratio of the signal value corresponding to one of the regions to a sum of the signal values corresponding to the two regions and a start timing of the overlap period of the plurality of sub-exposure periods corresponding to the other region.

4. The measurement device according to claim 3, wherein

> when a width of the sub-exposure period is Gw,

> > the signal value corresponding to one of the regions is Sa,
> > the signal value corresponding to the other region is Sb, and
> > a time from emission of the pulsed light to the start timing of the overlap period is Tb,

> the calculation unit calculates the arrival time Tx according to $Tx = Tb - Gw \times \{Sa/(Sa + Sb)\}$.

5. The measurement device according to claim 1 or 2, wherein
the sub-exposure period is an integral multiple of the width of the pulsed light.

6. The measurement device according to claim 1 or 2, wherein
the imaging sensor

> includes a light receiving element that generates charges corresponding to an exposure amount for each pixel and a storage unit that stores the charges, and
> causes the storage unit to store the charges generated in the light receiving element in a certain sub-exposure period and the charges generated in the light receiving element in another sub-exposure period having a different start timing, and outputs a signal value corresponding to the charges stored in the storage unit.

7. The measurement device according to claim 6, wherein

the imaging sensor causes the storage unit to alternately and repeatedly store the charges generated in the light receiving element in the certain sub-exposure period and the charges generated in the light receiving element in the other sub-exposure period having a different start timing, and outputs the signal value corresponding to the charges stored in the storage unit.

8. The measurement device according to claim 6, wherein
the imaging sensor

includes a plurality of the storage units, and a drive circuit that distributes and stores the charges to the respective storage units according to the exposure periods, and
distributes and stores the charges generated by one pulsed light to the respective storage units according to the exposure periods.

## FIG. 1A

MEASUREMENT
DIRECTION

CONTROL UNIT — 30

TIMING CONTROL UNIT — 32

IMAGE ACQUISITION UNIT — 34

TIME CALCULATION UNIT — 36

DISTANCE
CALCULATION UNIT — 38

LIGHT
EMITTING UNIT — 10

LIGHT
SOURCE — 12

IMAGING UNIT

IMAGING
SENSOR — 22

20

1

## FIG. 1B

Tp

Lw

LIGHT EMISSION

Gw

EXPOSURE

Tdelay

Tdelay

REPEAT n TIMES

# FIG. 2

MEASUREMENT
DIRECTION →

REGION 1    REGION 2    REGION 3    REGION 4

IMAGE OF REGION 1    IMAGE OF REGION 2    IMAGE OF REGION 3    IMAGE OF REGION 4

DISTANCE IMAGE

EP 4 474 860 A1

*FIG. 3A*

MEASUREMENT
DIRECTION →

1

| REGION 1 | REGION 2 | REGION 3 | REGION 4 | REGION 5 | REGION 6 | REGION 7 | REGION 8 | REGION 9 | REGION 10 | REGION 11 | REGION 12 | REGION 13 | REGION 14 | REGION 15 | REGION 16 |

→ DISTANCE

NORMAL MODE

*FIG. 3B*

REGION 1 | REGION 2 | REGION 3 | REGION 4 | REGION 5 | REGION 6 | REGION 7 | REGION 8

MEASUREMENT
DIRECTION

HIGH-SPEED
MODE

DISTANCE

FIG. 4A

L1

1

Lw

LIGHT EMISSION OPERATION

(REFLECTED LIGHT)

Gw(=Lw)

EXPOSURE OPERATION — t

Tdelay

WHEN Gw = Lw

FIG. 4B

L2(>L1)

1

L1

Lw

LIGHT EMISSION OPERATION

(REFLECTED LIGHT)

Gw(=Lw)

EXPOSURE OPERATION — t

Tdelay

WHEN Gw = Lw

19

FIG. 4C

WHEN Gw = Lw

LIGHT EMISSION OPERATION

(REFLECTED LIGHT)

EXPOSURE OPERATION

Lw

Gw(=Lw)

Tdelay

L3（＞L2）

L2

t

FIG. 5

WHEN Gw = Lw

EXPOSURE AMOUNT
(SIGNAL VALUE)

L1  L2  L3

DISTANCE

*FIG. 6A*

WHEN Gw = Lw

LIGHT EMISSION OPERATION

Lw

(REFLECTED LIGHT)

Lw

EXPOSURE OPERATION A

Gw(=Lw)

EXPOSURE OPERATION B

Gw(=Lw)

TIME t

0        Ta ┆ Tb
           Tx

$$Tx = Tb - Lw \times \frac{Sa}{Sa + Sb}$$

$$Lx = \frac{Co \times Tx}{2}$$

## FIG. 6B

WHEN Gw = Lw

EXPOSURE AMOUNT A

EXPOSURE AMOUNT B

Sa

Sb

DISTANCE L

La  Lb

Lx

$$Tx = Tb - Lw \times \frac{Sa}{Sa + Sb}$$

$$Lx = \frac{Co \times Tx}{2}$$

## FIG. 7A

1

L2

Lw

LIGHT EMISSION

WHEN Gw > Lw

(REFLECTED LIGHT)

Gw

EXPOSURE

t

0    Tdelay

## FIG. 7B

L2'(>L2)

L2

Lw

LIGHT EMISSION

(REFLECTED LIGHT)

Gw

EXPOSURE

0    Tdelay

t

WHEN Gw > Lw

## FIG. 8

EXPOSURE AMOUNT
(SIGNAL VALUE)

WHEN Gw > Lw

DISTANCE

L2          L2'

## FIG. 9A

WHEN Gw > Lw

(Gw = 2Lw)

LIGHT EMISSION OPERATION

EXPOSURE OPERATION A — SUB-EXPOSURE OPERATION $A_1$, SUB-EXPOSURE OPERATION $A_2$

EXPOSURE OPERATION B — SUB-EXPOSURE OPERATION $B_1$, SUB-EXPOSURE OPERATION $B_2$

Lw

Gw

Lw

Gw

OVERLAP PERIOD (Lw)

OVERLAP PERIOD (Lw)

TIME t

0    Ta    Tx Tb

$$Tx = Tb - Gw \times \frac{Sa}{Sa + Sb}$$

$$Lx = \frac{Co \times Tx}{2}$$

## FIG. 9B

WHEN Gw > Lw

(Gw = 2Lw)

EXPOSURE AMOUNT A { EXPOSURE AMOUNT $A_1$ / EXPOSURE AMOUNT $A_2$

EXPOSURE AMOUNT B { EXPOSURE AMOUNT $B_1$ / EXPOSURE AMOUNT $B_2$

DISTANCE

EXPOSURE AMOUNT A ($A_1 + A_2$)

$Sa$

EXPOSURE AMOUNT B ($B_1 + B_2$)

$Sb$

DISTANCE

La   Lx Lb

$$Tx = Tb - Gw \times \frac{Sa}{Sa + Sb}$$

$$Lx = \frac{Co \times Tx}{2}$$

FIG. 10

## FIG. 11A

LIGHT EMISSION OPERATION — Lw

EXPOSURE OPERATION A — Gw(=Lw)

EXPOSURE OPERATION B

EXPOSURE OPERATION C

EXPOSURE OPERATION D

TIME t

## FIG. 11B

EXPOSURE AMOUNT A

EXPOSURE AMOUNT B

EXPOSURE AMOUNT C

EXPOSURE AMOUNT D

DISTANCE L

FIG. 12A

## FIG. 12B

EXPOSURE AMOUNT A
$(A_1 + A_2)$

EXPOSURE AMOUNT B
$(B_1 + B_2)$

EXPOSURE AMOUNT C
$(C_1 + C_2)$

EXPOSURE AMOUNT D
$(D_1 + D_2)$

$A_1+A_2$

$A_2$  $A_1$

$B_1+B_2$

$B_2$  $B_1$

$C_1+C_2$

$C_2$  $C_1$

$D_1+D_2$

$D_2$  $D_1$

DISTANCE L

EP 4 474 860 A1

*FIG. 13*

| LIGHT EMISSION OPERATION | SUB-EXPOSURE OPERATION (SUB-EXPOSURE PERIOD) $A_1, B_1, C_1, D_1$ | LIGHT EMISSION OPERATION | SUB-EXPOSURE OPERATION (SUB-EXPOSURE PERIOD) $A_2, B_2, C_2, D_2$ | LIGHT EMISSION OPERATION | SUB-EXPOSURE OPERATION (SUB-EXPOSURE PERIOD) $A_1, B_1, C_1, D_1$ | LIGHT EMISSION OPERATION | SUB-EXPOSURE OPERATION (SUB-EXPOSURE PERIOD) $A_2, B_2, C_2, D_2$ |

Tp

TIME

## FIG. 14A

$$Tx = Tb - Gw \times \frac{Sa}{Sa + Sb}$$

$$Lx = \frac{Co \times Tx}{2}$$

## FIG. 14B

$$Tx = Tb - Gw \times \frac{Sa}{Sa + Sb}$$

$$Lx = \frac{Co \times Tx}{2}$$

## INTERNATIONAL SEARCH REPORT

| International application No. |
| --- |
| **PCT/JP2022/043371** |

**A.    CLASSIFICATION OF SUBJECT MATTER**

*G01S 7/4865*(2020.01)i; *G01S 17/10*(2020.01)i
FI:    G01S7/4865; G01S17/10

According to International Patent Classification (IPC) or to both national classification and IPC

**B.    FIELDS SEARCHED**

Minimum documentation searched (classification system followed by classification symbols)

G01S7/48 - G01S7/51; G01S17/00 - G01S17/95; G01C3/00 - G01C3/32; G01B11/00 - G01B11/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2016-95234 A (DENSO CORP) 26 May 2016 (2016-05-26)<br>entire text, all drawings | 1-8 |
| A | WO 2021/009997 A1 (SONY SEMICONDUCTOR SOLUTIONS CORPORATION) 21 January 2021 (2021-01-21)<br>entire text, all drawings | 1-8 |
| A | WO 2017/022152 A1 (PANASONIC INTELLECTUAL PROPERTY MANAGEMENT CO., LTD.) 09 February 2017 (2017-02-09)<br>entire text, all drawings | 1-8 |
| A | JP 2021-60246 A (HITACHI LG DATA STORAGE INC) 15 April 2021 (2021-04-15)<br>entire text, all drawings | 1-8 |
| A | US 2021/0199781 A1 (SAMSUNG ELECTRONICS CO., LTD.) 01 July 2021 (2021-07-01)<br>entire text, all drawings | 1-8 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 January 2023** | **17 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/043371**

| Patent document cited in search report | | | Publication date (day/month/year) | Patent family member(s) | | | Publication date (day/month/year) |
|---|---|---|---|---|---|---|---|
| JP | 2016-95234 | A | 26 May 2016 | US | 2017/0315238 | A1 | |
| | | | | entire text, all drawings | | | |
| | | | | WO | 2016/075945 | A1 | |
| | | | | DE | 112015005163 | T5 | |
| WO | 2021/009997 | A1 | 21 January 2021 | US | 2022/0291380 | A1 | |
| | | | | entire text, all drawings | | | |
| | | | | DE | 112020003368 | T5 | |
| | | | | CN | 114174858 | A | |
| WO | 2017/022152 | A1 | 09 February 2017 | US | 2018/0149750 | A1 | |
| | | | | entire text, all drawings | | | |
| | | | | EP | 3330739 | A1 | |
| | | | | CN | 107850669 | A | |
| JP | 2021-60246 | A | 15 April 2021 | US | 2021/0103054 | A1 | |
| | | | | entire text, all drawings | | | |
| | | | | CN | 112698342 | A | |
| US | 2021/0199781 | A1 | 01 July 2021 | KR | 10-2021-0084752 | A | |
| | | | | CN | 113050065 | A | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022014089 A